# EUROPEAN PATENT APPLICATION

(11) **EP 4 015 656 A1**
(43) Date of publication of application: **22.06.2022**
(21) Application number: 19941541.5
(22) Date of filing: 04.12.2019
(51) Int. Cl.: C21D 1/18

(54) **METHOD FOR PRODUCING ULTRA-LOW-TEMPERATURE HIGH-STRENGTH ACID-RESISTANT CONTAINER STEEL BY MEANS OF CASTING BLANK**

(30) Priority: 14.08.2019 CN 201910752432
(71) Applicant: Nanjing Iron & Steel Co., Ltd., Nanjing, Jiangsu 210035 (CN)
(72) Inventor: ZHENG, Jianping, Nanjing, Jiangsu 210035 (CN); ZHANG, Bingjun, Nanjing, Jiangsu 210035 (CN); FANG, Lei, Nanjing, Jiangsu 210035 (CN)
(74) Representative: Gong, Jinping
(86) International application number: PCT/CN2019/122910
(87) International publication number: WO 2021/027188

(57) **Abstract**

The present disclosure discloses a method for manufacturing a high-strength acid-resistant vessel steel for ultra-low-temperature use via a cast slab, comprising the following steps: (1) defining the composition for melting; (2) heating; (3) rolling; and (4) performing a heat treatment. The present disclosure manufactures the high-strength and acid-resistant vessel steel for the ultra-low-temperature use by adopting the alloying composition design of low carbon + a small amount of chromium, and combining with a reasonable rolling process and a heat treatment process of quenching and tempering. The high-strength and acid-resistant vessel steel for the ultra-low-temperature use obtained has the mechanical properties meeting the technical requirements, with its acid-resistant property meeting the standard of NACE-TM2084-2016. Specifically, the high-strength and acid-resistant vessel steel for the ultra-low-temperature use has the following mechanical properties: a yield strength ≥ 340 MPa, a tensile strength ≥ 480 MPa, an elongation ≥ 35%, a transverse impact energy (Akv) at 1/4 thickness and -60 °C ≥ 300 J, and a crack length ratio (CLR), a crack thickness ratio (CTR) and a crack sensitivity ratio (CSR) of hydrogen-induced cracking (HIC) resistance = 0%, 0%, and 0%, respectively. The technical difficulties such as unstable low-temperature impact toughness, poor HIC resistance and unstable weldability of the high-strength and acid-resistant vessel steel for the ultra-low-temperature use via the cast slab are solved.

## Description

### TECHNICAL FIELD

The present disclosure relates to the technical field of steels, and specifically relates to a method for manufacturing a high-strength and acid-resistant vessel steel for ultra-low-temperature use via a cast slab.

### BACKGROUND

The petrochemical and coal chemical industries have developed rapidly based on the requirements of renewable and clean energy. However, the requirements of sulfur-containing oil and gas on the hydrogen-induced cracking resistance of vessel steels used in the wet H₂S environment are higher and higher. What's more, the corrosive and hydrogen-induced cracking accidents of pressure vessels and pipelines for the low-temperature use caused in the wet H₂S environment are continuously increasing. A high-strength and acid-resistant vessel steel plate for the ultra-low-temperature use plate via the cast slab has become an important metal material for manufacturing vessels such as gas absorption towers, large gas condensers, chemical pipelines and the like for the low-temperature use in the petrochemical industry, which has large market demand. The method for manufacturing the high-strength, high-toughness and acid-resistant vessel steel plate for the ultra-low-temperature use in China has not yet been reported. The high-strength, high-toughness and acid-resistant vessel steel plate has the impact energy at 1/4 thickness and -60 °C ≥ 300 J, the tensile strength ≥ 480 MPa, and the crack length ratio (CLR), the crack thickness ratio (CTR) and the crack sensitivity ratio (CSR) of hydrogen-induced cracking (HIC) resistance = 0%, 0%, and 0%, respectively, which is a landmark high-end product for the acid-resistant vessel in the petrochemical industry. The research and development of the high-toughness and acid-resistant vessel steel for the ultra-low-temperature use has an indicative and leading significance for the market development of the acid-resistant vessel steel for the ultra-low-temperature use.

At present, many steel mills are studying processes for manufacturing the high-strength, high-toughness and acid-resistant vessel steel, but the process for manufacturing the high-strength and acid-resistant vessel steel for the ultra-low-temperature use via the cast slab using quenching and tempering method has not yet been reported, and the actual engineering application of the finished product in the published patents is even less.

The Chinese patent with the publication number of CN201510014303.3 discloses a normalized and acid-resistant pressure vessel steel plate and a manufacturing method thereof. The reasonable performance is obtained through the reasonable composition design, online controlled rolling and air-vapor cooling for normalizing, but the Nb + V + Ti microalloy composition design is adopted, and the obtained impact energy is only at -20 °C. It is not clear whether the impact energy is in vertical or horizontal direction. The Chinese patent with the publication number of CN201810494189.2 discloses a method for manufacturing an ultra-thick and acid-resistant vessel steel plate. The reasonable performance is obtained by adopting the reasonable composition design and normalizing process, but Cu and Ni are added, and the die-casting slab is adopted, which lead to low yield and high production cost. The low-temperature impact energy is only at -20 °C with the single value of 97 J, having relatively low balance. A literature about the effect of heat treatment method on the properties of medium-carbon and acid-resistant vessel steel has been published. By adopting the reasonable composition design, and studying the effects of TMCP, normalizing and normalizing + tempering on the properties of the medium-carbon and acid-resistant vessel steel, the ductile-brittle transition temperature of the steel plate obtained by normalizing and normalizing + tempering is between -40 °C and -50 °C. In the same process, the acid-resistant results have relatively large fluctuations, which affects the solidification of the process.

### SUMMARY

In view of the shortcomings in the prior art, the present disclosure is to provide a method for manufacturing a high-strength and acid-resistant vessel steel for ultra-low-temperature use via a cast slab. The method manufactures the high-strength and acid-resistant vessel steel for the ultra-low-temperature use by adopting the alloying composition design of low carbon and a small amount of chromium (Cr), and combining with the reasonable rolling process and the heat treatment process of quenching and tempering. The high-strength and acid-resistant vessel steel for the ultra-low-temperature use obtained has the mechanical properties meeting the technical requirements, with its acid-resistant property meeting the standard of NACE-TM2084-2016. Specifically, the high-strength and acid-resistant vessel steel for the ultra-low-temperature use has the following mechanical properties: a yield strength ≥ 340 MPa, a tensile strength ≥ 480 MPa, an elongation ≥ 35%, a transverse impact energy (Akv) at 1/4 thickness and -60 °C ≥ 300 J, and a crack length ratio (CLR), a crack thickness ratio (CTR), and a crack sensitivity ratio (CSR) of hydrogen-induced cracking (HIC) resistance = 0%, 0%, and 0%, respectively. The technical difficulties such as unstable low-temperature impact toughness, poor HIC resistance and unstable weldability of the high-strength and acid-resistant vessel steel for the ultra-low-temperature use via the cast slab are solved.

To achieve the above-mentioned objects, the technical solution employed by the present disclosure is the method for manufacturing the high-strength and acid-resistant vessel steel for the ultra-low-temperature use via the cast slab, comprising the following steps:
(1) defining the composition for melting in percentage by weight: C: 0.12-0.14, Si: 0.2-0.3, Mn: 0.8-1.0, P ≤ 0.008, S ≤ 0.001, Cr: 0.30-0.35, Nb: < 0.01, V: < 0.10, Ti: < 0.01, Alt: 0.050-0.07, Ceq = C + Mn/6 + (Cr + Mo + V)/5 + (Cu + Ni)/15 ≤ 0.35, the balance of Fe and unavoidable impurities;
(2) heating: heating the cast slab at 1220-1240 °C, soaking the cast slab at 1207-1213 °C for 51-57 min; then tapping at 1180-1200 °C, and keeping a holding time of 260-360 min; wherein, the holding time is preferably 280-357 min, and the tapping temperature is preferably 1188-1197 °C;
(3) rolling: rolling immediately after tapping as a first-stage rolling, and then performing a second-stage rolling after intermediate cooling (between the first-stage rolling and the second-stage rolling); wherein, the second-stage rolling is started at 840- 880 °C as an initial rolling of the second-stage rolling, and finished at 820-860 °C as a final rolling of the second-stage rolling; a thickness of an intermediate slab is controlled to be greater than or equal to 3 h (h represents the thickness of the intermediate slab with the unit of mm); naturally cooling after the second-stage rolling is completed; and
(4) performing a heat treatment: quenching at 890-900 °C with a heating rate of 1.3 ± 0.1 min/mm; and tempering at 680-700 °C with the heating rate of 2.0 ± 0.1 min/mm.

Preferably, the composition described in the step (1) in percentage by weight is: C: 0.12, Si: 0.25, Mn: 0.81, P: 0.007, S: 0.0006, Cr: 0.32, Nb: 0.002, V: 0.002, Ti: 0.0039, Alt: 0.052, Ceq = C + Mn/6 + (Cr + Mo + V)/5 + (Cu + Ni)/15 = 0.32, the balance of Fe and inevitable impurities.

Preferably, the composition described in the step (1) in percentage by weight is: C: 0.12, Si: 0.25, Mn: 0.83, P: 0.008, S: 0.001, Cr: 0.35, Nb: 0.002, V: 0.002, Ti: 0.0032, Alt: 0.061, Ceq = C + Mn/6 + (Cr + Mo + V)/5 + (Cu + Ni)/15 = 0.34, the balance of Fe and inevitable impurities.

Preferably, the composition described in the step (1) in percentage by weight is: C: 0.14, Si: 0.3, Mn: 1.0, P: 0.006, S: 0.0009, Cr: 0.32, Nb: 0.002, V: 0.002, Ti: 0.0040, Alt: 0.07, Ceq = C + Mn/6 + (Cr + Mo + V)/5 + (Cu + Ni)/15 = 0.35, the balance of Fe and inevitable impurities.

Preferably, the cast slab in the step (2) is selected with a compression ratio of 7.5-8 according to a thickness of a rolled product. The cast slab with the thickness of 260 mm is selected.

Preferably, a steel plate obtained after the second-stage rolling is completed is performed with an online pre-leveling at 800-820 °C to ensure an original shape.

Since a high-temperature and large-reduction rolling is required for manufacturing the high-strength and acid-resistant vessel steel for the ultra-low-temperature use, the shape of the finished product after rolling is poor. Thus, online pre-leveling is carried out at 800-820 °C to ensure the original shape. Based on the requirements of low-cost production, Cr capable of improving hardenability is used in the composition design to ensure full hardening by quenching, so that the cooling rate of the core is increased. Thus, more quenched and hardened structures are obtained. The rolling is finished at high temperature, reducing the requirements on the device with high rolling force for production.

In addition, since high strength, high toughness and high HIC resistance are required, a controlled rolling in a high-temperature and large-reduction mode is performed. To reduce the influence of low mass of the cast slab, the present disclosure adopts the compression ratio of 7.5-8. That is, the cast slab with the thickness of 260 mm is selected. The soaking temperature is controlled at about 1200 °C. Considering the time required for the dissolution of alloys, the holding time is appropriately extended to ensure that the soaking temperature of the cast slab is uniform, avoiding the cast slab in a "red and black" condition.

Preferably, the rolling in the step (3) adopts a two-stage broadside rolling; a pass reduction rate of the first-stage rolling is greater than or equal to 15%, and the pass reduction rate of the second-stage rolling is greater than or equal to 13%.

Since the thickness of the finished product is 33.35 mm, the two-stage broadside rolling process is adopted to avoid the segregation of the core during the rolling process which would affect the strength and impact toughness. The pass reduction rate of the first-stage rolling greater than or equal to 15% and the pass reduction rate of the second-stage rolling greater than or equal to 13% can ensure that the structure from the surface to the core is sufficiently fine.

After the heat treatment in the step (4) is completed, a bainite-ferrite structure is obtained with a grain size of 8 µm-12 µm and a grain size number of 10 after quenching and tempering.

A steel plate manufactured by the method for manufacturing the high-strength and acid-resistant vessel steel for the ultra-low-temperature use via the cast slab has the following mechanical properties: the yield strength ≥ 340 MPa, the tensile strength ≥ 480 MPa, the elongation ≥ 35%, the transverse impact energy (Akv) at 1/4 thickness and -60 °C ≥ 300 J, and the CLR, the CTR and the CSR of the HIC resistance = 0%, 0%, and 0%, respectively.

In view of the harsh service conditions of an acid-resistant vessel, the HIC resistance is one of the key indicators to directly determine the success of developing the acid-resistant vessel. Since the crack sensitivity is the most direct factor to affect the HIC resistance. Specifically, the steel plate is a metallographic structure, without having a banded structure such as pearlite. The present disclosure adopts the composition design of low phosphorus and low sulfur to reduce the content of inclusions, and simultaneously adds the high-hardenability Cr alloy to reduce the upgrading of rolling mill. By adopting TMCP rolling techniques such as large compression ratio and pass reduction rate to eliminate the segregation zone, and combining with the reasonable heat treatment process, the traditional ferrite-pearlite structure is adjusted to the bainite-ferrite metallographic structure to improve the HIC resistance. The optimal HIC resistance can reach as follows: CLR = 0%, CTR = 0%, and CSR = 0%. The method of the present disclosure is applied to the large-scale industrial production, and the finished product has excellent performance.

Considering that the high-strength and acid-resistant vessel steel for the ultra-low-temperature use requires not only high strength, ultra-low-temperature toughness, and acid resistance, but also good weldability. In addition, the simple production with low cost is required. Therefore, the present disclosure studies the chemical composition and production process of manufacturing the high-strength and acid-resistant vessel steel for the ultra-low-temperature use via the cast slab, and designs the method for manufacturing the high-strength and acid-resistant vessel steel for the ultra-low-temperature use via the cast slab.

The present disclosure has the following advantages over the prior art:
(1) The present disclosure manufactures the high-strength and acid-resistant vessel steel for the ultra-low-temperature use by adopting the alloying composition design of medium carbon, low manganese, Cr and carbon equivalent Ceq = C + Mn/6 + (Cr + Mo + V)/5 + (Cu + Ni)/15 ≤ 0.35, and combining with the reasonable controlled rolling process and the quenching and tempering process. The rolling is finished at high temperature, without requiring high rolling force of the rolling mill. The production process is simple, and the cost is low.
(2) The present disclosure manufactures the high-strength and acid-resistant vessel steel for the ultra-low-temperature use via the reasonable controlled rolling process. Through the optimal heat treatment process of quenching and tempering, the high-strength and acid-resistant vessel steel for the ultra-low-temperature use obtained has the mechanical properties meeting the technical requirements: the yield strength ≥ 340 MPa, the tensile strength ≥ 480 MPa, the elongation ≥ 35%, the transverse impact energy (Akv) at 1/4 thickness and -60 °C ≥ 300 J, and the CLR, the CTR and the CSR of the HIC resistance = 0%, 0%, and 0%, respectively.
(3) The present disclosure solves the technical difficulties, such as unstable low-temperature impact toughness, poor HIC resistance and unstable weldability of the high-strength and acid-resistant vessel steel for the ultra-low-temperature use via the cast slab.
(4) Through the method of the present disclosure, the four-roll single-strand reversible 5000 mm rolling mill is capable of manufacturing a high-strength, high-toughness and high-HIC-resistance vessel steel for the ultra-low-temperature use via its production line.

Generally, the present disclosure adopts the alloying composition design of low carbon, low manganese, 0.3% Cr and the carbon equivalent Ceq ≤ 0.35 to manufacture the high-strength and acid-resistant vessel steel for the ultra-low-temperature use via the cast slab. After the heat treatment of quenching and tempering, the high-strength and acid-resistant vessel steel for the ultra-low-temperature use obtained has the mechanical properties meeting the technical requirements. The steel plate manufactured by the method of the present disclosure has the impact energy at 1/4 thickness and -60 °C ≥ 300 J, the tensile strength ≥ 480 MPa, and the CLR, the CTR and the CSR of the HIC resistance = 0%, 0%, and 0%, respectively. The steel plate has good acid resistance, and becomes an important metal material for manufacturing the vessels such as gas absorption towers, large gas condensers, chemical pipelines and the like for the low-temperature use in the petrochemical industry. The research and development of the high-strength, high-toughness and high-HIC-resistance vessel steel used at specific low temperature has an indicative and leading significance for the market development of the acid-resistant vessel steel for the low-temperature use.

### BRIEF DESCRIPTION OF THE DRAWINGS

FIG. 1 is an image of a metallographic structure of a steel plate at 1/4 thickness after tempering at 695 °C for 107 min with a heating rate of 2.0 min/mm; wherein, a tempered structure in FIG. 1 is a tempered bainite-ferrite structure; a grain size of the steel plate at the 1/4 thickness is controlled to be 8 µm-12 µm, and a grain size number is controlled to be 10; and
FIG. 2 is a schematic diagram of a sample performed with a hydrogen-induced cracking (HIC) test.

### DETAILED DESCRIPTION OF THE EMBODIMENTS

The present disclosure will be further described below in conjunction with the accompanying drawings and examples.

### Examples 1-3

(1) The actual weight percentage of the chemical composition of the high-strength and acid-resistant vessel steel for the ultra-low-temperature use

### The chemical composition of Example 1

| Element | Si | P | S | Cr | Nb | V | Ti |
|---|---|---|---|---|---|---|---|
| Weight percentage (%) | 0.25 | 0.007 | 0.0006 | 0.32 | 0.002 | 0.002 | 0.0039 |

| Element | Alt | C | Ceq | | | | |
|---|---|---|---|---|---|---|---|
| Weight percentage (%) | 0.052 | 0.12 | 0.32 | | | | |

### The chemical composition of Example 2

| Element | Si | P | S | Cr | Nb | V | Ti |
|---|---|---|---|---|---|---|---|
| Weight percentage (%) | 0.25 | 0.008 | 0.001 | 0.35 | 0.002 | 0.002 | 0.0032 |

| Element | Alt | C | Ceq | | | | |
|---|---|---|---|---|---|---|---|
| Weight percentage (%) | 0.061 | 0.12 | 0.34 | | | | |

### The chemical composition of Example 3

| Element | Si | P | S | Cr | Nb | V | Ti |
|---|---|---|---|---|---|---|---|
| Weight percentage (%) | 0.30 | 0.006 | 0.0009 | 0.32 | 0.002 | 0.002 | 0.0040 |

| Element | Alt | C | Ceq | | | | |
|---|---|---|---|---|---|---|---|
| Weight percentage (%) | 0.07 | 0.14 | 0.35 | | | | |

The balance is Fe and unavoidable impurities.

### (2) Heating

| Examples | Thickness of the cast slab | Heating temperature (°C) | Soaking temperature (°C) | Tapping temperature (°C) | Holding time (min) | Soaking time (min) |
|---|---|---|---|---|---|---|
| 1 | 260 mm | 1220-1240 | 1210 | 1192 | 280 | 51 |
| 2 | 260 mm | 1220-1240 | 1207 | 1188 | 260 | 57 |
| 3 | 260 mm | 1220-1240 | 1213 | 1197 | 357 | 54 |

Since high strength, high toughness and high HIC resistance are required, the controlled rolling in a high-temperature and large-reduction mode is performed. To reduce the influence of low mass of the cast slab, the present disclosure adopts the compression ratio of 7.5-8. That is, the cast slab with the thickness of 260 mm is selected. The soaking temperature is controlled at about 1200 °C. Considering the time required for the dissolution of alloy, the holding time is appropriately extended to ensure that the soaking temperature of the cast slab is uniform, avoiding the cast slab in "red and black".

### (3) Rolling immediately after tapping, and naturally cooling after rolling

| Examples | Thickness of the finished product (mm) | Temperature of the intermediate slab (mm) | Initial rolling temperature of the second-stage rolling (°C) | Final rolling temperature of the second-stage rolling (°C) |
|---|---|---|---|---|
| 1 | 33.35 | 101 | 880 | 859 |
| 2 | 33.35 | 101 | 866 | 848 |
| 3 | 33.35 | 101 | 841 | 820 |

Since the thickness of the finished product is 33.35 mm, the two-stage broadside rolling process is adopted to avoid the segregation of the core during the rolling process which affects the strength and impact toughness. The pass reduction rate of the first-stage rolling greater than or equal to 15% and the pass reduction rate of the second-stage rolling greater than or equal to 13% can ensure that the structure from the surface to the core is sufficiently fine.

Since a high-temperature and large-reduction rolling is required for manufacturing the high-strength and acid-resistant vessel steel for the ultra-low-temperature use, the shape of the finished product after rolling is poor. Thus, online pre-leveling is carried out at 800-820 °C to ensure the original shape. Based on the requirements of low-cost production, Cr capable of improving hardenability is used in the composition design to ensure full hardening by quenching, so that the cooling rate of the core is increased. Thus, more quenched and hardened structures are obtained. The rolling is finished at high temperature, reducing the requirements on the device with high rolling force for production.

### (4) Quenching

| Examples | Thickness of the finished product (mm) | Quenching temperature (°C) | Heating rate (min/mm) | Total heating time (min) |
|---|---|---|---|---|
| 1 | 33.35 | 890 | 1.31 | 61 |
| 2 | 33.35 | 900 | 1.30 | 61 |
| 3 | 33.35 | 896 | 1.35 | 61 |

### Tempering

| Examples | Thickness of the finished product (mm) | Tempering temperature (°C) | Heating rate (min/mm) | Total heating time (min) |
|---|---|---|---|---|
| 1 | 33.35 | 680 | 2.1 | 111 |
| 2 | 33.35 | 696 | 1.99 | 113 |
| 3 | 33.35 | 700 | 1.92 | 109 |

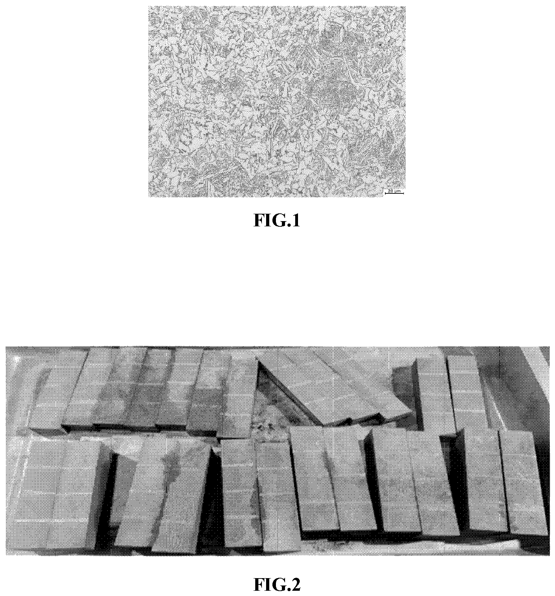

FIG. 1 shows the metallographic structure of the sample at the 1/4 thickness after example 2. FIG. 2 is the sample performed with the HIC test after example 2. FIG. 1 shows the metallographic structure with fine grain and good toughness obtained by the method of the present disclosure. FIG. 2 shows that the sample has no cracks after the HIC test, which means the excellent HIC resistance is obtained.

### Test Example 1

The high-strength and acid-resistant vessel steel for the ultra-low-temperature use obtained in Examples 1-3 of the present disclosure is tested, and its properties are as follows.

### Mechanical properties

| Examples | Thickness of the steel plate | Yield strength (MPa) | Technical requirement (MPa) | Tensile strength (MPa) | Technical requirement (MPa) | Elongation (%) | Technical requirement (%) |
|---|---|---|---|---|---|---|---|
| 1 | 33.35 mm | 388 | ≥ 240 | 509 | 450-585 | 38 | ≥ 23 |
| 2 | 33.35 mm | 367 | ≥ 240 | 512 | 450-585 | 36 | ≥ 23 |
| 3 | 33.35 mm | 341 | ≥ 240 | 489 | 450-585 | 39 | ≥ 23 |

| Examples | Thickness of the steel plate | Transverse impact energy at the 1/4 thickness/mean impact energy (-60°C, Akv) | Technical requirement on the transverse impact energy at the 1/4 thickness (-45°C, Akv) |
|---|---|---|---|
| 1 | 33.35 mm | 300, 316, 315/310 | ≥ 27 |
| 2 | 33.35 mm | 326, 310, 308/315 | ≥ 27 |
| 3 | 33.35 mm | 312, 307, 315/311 | ≥ 27 |

### Acid resistance

| Examples | Thickness of the steel plate | CLR | Technical requirement (%) | CTR | Technical requirement (%) | CSR | Technical requirement (%) |
|---|---|---|---|---|---|---|---|
| 1 | 33.35 mm | 0 | ≤ 10 | 0 | ≤ 3 | 0 | ≤ 1 |
| 2 | 33.35 mm | 0 | ≤ 10 | 0 | ≤ 3 | 0 | ≤ 1 |
| 3 | 33.35 mm | 0 | ≤ 10 | 0 | ≤ 3 | 0 | ≤ 1 |

The present disclosure manufactures the high-strength and acid-resistant vessel steel for the ultra-low-temperature use via the cast slab by adopting the alloying composition design of medium carbon, low manganese, a small amount of Cr and the carbon equivalent Ceq = C + Mn/6 + (Cr + Mo + V)/5 + (Cu + Ni)/15 ≤ 0.35, and combining with the reasonable controlled rolling and the quenching and tempering process. Through the optimal heat treatment process of quenching and tempering, the high-strength and acid-resistant vessel steel for the ultra-low-temperature use obtained has the mechanical properties meeting the technical requirements: the yield strength ≥ 340 MPa, the tensile strength ≥ 480 MPa, the elongation ≥ 35%, the transverse impact energy (Akv) at the 1/4 thickness and -60 °C ≥ 300 J, and the CLR, CTR and CSR of the HIC resistance = 0%, 0%, and 0%, respectively. The strength, ductility, transverse impact toughness and acid resistance of the high-strength and acid-resistant vessel steel for the ultra-low-temperature use obtained by the present disclosure all meet the technical requirements, and also meet the standard on the mechanical properties required by an international large-scale petrochemical project in the Middle East. Due to the high requirements on high toughness and acid resistance at ultra-low temperature, the large-reduction rolling is performed in the actual industrial production process, which is easy to cause the original grain size to be large, and even mixed grain, seriously affecting the match of the strength with the low-temperature impact toughness. Thus, the requirements on the cooling capacity and precision of the rolling mill and quenching machine are high. By adopting the alloying composition design of high-hardenability Cr and medium carbon, using the transverse and longitudinal broadside rolling method to roll the cast slab, and completing the rolling process at high temperature, the problem that the high-strength and acid-resistant vessel steel with high toughness, high weldability and high HIC resistance for the ultra-low-temperature use cannot be manufactured by the conventional rolling mill due to its limited capacity is solved.

## Claims

**1.** A method for manufacturing a high-strength and acid-resistant vessel steel for ultra-low-temperature use via a cast slab, wherein, comprising the following steps:
(1) defining the composition for melting in percentage by weight: C: 0.12-0.14, Si: 0.2-0.3, Mn: 0.8-1.0, P ≤ 0.008, S ≤ 0.001, Cr: 0.30-0.35, Nb: < 0.01, V: < 0.10, Ti: < 0.01, Alt: 0.050-0.07, Ceq = C + Mn/6 + (Cr + Mo + V)/5 + (Cu + Ni)/15 ≤ 0.35, the balance of Fe and unavoidable impurities;
(2) heating: heating the cast slab at 1220-1240 °C, soaking the cast slab at 1207-1213 °C for 51-57 min; then tapping at 1180-1200 °C, and keeping a holding time of 260-360 min;
(3) rolling: rolling immediately after tapping as a first-stage rolling, and then performing a second-stage rolling after intermediate cooling; wherein, the second-stage rolling is started at 840- 880 °C as an initial rolling of the second-stage rolling, and finished at 820-860 °C as a final rolling of the second-stage rolling; a thickness of an intermediate slab is controlled to be greater than or equal to 3 h; naturally cooling after the second-stage rolling is completed; and
(4) performing a heat treatment: quenching at 890-900 °C with a heating rate of 1.3 ± 0.1 min/mm; and tempering at 680-700 °C with the heating rate of 2.0 ± 0.1 min/mm.

**2.** The method for manufacturing the high-strength and acid-resistant vessel steel for the ultra-low-temperature use via the cast slab according to claim 1, wherein, the composition described in the step (1) in percentage by weight is: C: 0.12, Si: 0.25, Mn: 0.81, P: 0.007, S: 0.0006, Cr: 0.32, Nb: 0.002, V: 0.002, Ti: 0.0039, Alt: 0.052, Ceq = C + Mn/6 + (Cr + Mo + V)/5 + (Cu + Ni)/15 = 0.32, the balance of Fe and inevitable impurities.

**3.** The method for manufacturing the high-strength and acid-resistant vessel steel for the ultra-low-temperature use via the cast slab according to claim 1, wherein, the composition described in the step (1) in percentage by weight is: C: 0.12, Si: 0.25, Mn: 0.83, P: 0.008, S: 0.001, Cr: 0.35, Nb: 0.002, V: 0.002, Ti: 0.0032, Alt: 0.061, Ceq = C + Mn/6 + (Cr + Mo + V)/5 + (Cu + Ni)/15 = 0.34, the balance of Fe and inevitable impurities.

**4.** The method for manufacturing the high-strength and acid-resistant vessel steel for the ultra-low-temperature use via the cast slab according to claim 1, wherein, the composition described in the step (1) in percentage by weight is: C: 0.14, Si: 0.3, Mn: 1.0, P: 0.006, S: 0.0009, Cr: 0.32, Nb: 0.002, V: 0.002, Ti: 0.0040, Alt: 0.07, Ceq = C + Mn/6 + (Cr + Mo + V)/5 + (Cu + Ni)/15 = 0.35, the balance of Fe and inevitable impurities.

**5.** The method for manufacturing the high-strength and acid-resistant vessel steel for the ultra-low-temperature use via the cast slab according to claim 1, wherein, the cast slab in the step (2) is selected with a compression ratio of 7.5-8 according to a thickness of a rolled product.

**6.** The method for manufacturing the high-strength and acid-resistant vessel steel for the ultra-low-temperature use via the cast slab according to claim 1, wherein, a steel plate obtained after the second-stage rolling is completed is performed with an online pre-leveling at 800-820 °C to ensure an original shape.

**7.** The method for manufacturing the high-strength and acid-resistant vessel steel for the ultra-low-temperature use via the cast slab according to claim 1, wherein, the rolling in the step (3) adopts a two-stage broadside rolling; a pass reduction rate of the first-stage rolling is greater than or equal to 15%, and the pass reduction rate of the second-stage rolling is greater than or equal to 13%.

**9.** The method for manufacturing the high-strength and acid-resistant vessel steel for the ultra-low-temperature use via the cast slab according to claim 1, wherein, after the heat treatment in the step (4) is completed, a bainite-ferrite structure is obtained with a grain size of 8 µm-12 µm and a grain size number of 10 after quenching and tempering.

**10.** A steel plate manufactured by the method for manufacturing the high-strength and acid-resistant vessel steel for the ultra-low-temperature use via the cast slab according to claim 1, wherein, the steel plate has the following mechanical properties: a yield strength ≥ 340 MPa, a tensile strength ≥ 480 MPa, an elongation ≥ 35%, a transverse impact energy (Akv) at 1/4 thickness and -60 °C ≥ 300 J, and a crack length ratio (CLR), a crack thickness ratio (CTR) and a crack sensitivity ratio (CSR) of hydrogen-induced cracking (HIC) resistance = 0%, 0%, and 0%, respectively.
